# EUROPEAN PATENT APPLICATION

(11) **EP 4 517 082 A1**
(43) Date of publication of application: **05.03.2025**
(21) Application number: 22940411.6
(22) Date of filing: 25.04.2022
(51) Int. Cl.: F03D 1/04, F03D 1/06, F03D 7/02

(54) **PERIPHERAL SUPPORT WIND TURBINE**

(71) Applicant: Calle Madrid, Alfredo Raúl, Lurigancho, Lima 15 (PE)
(72) Inventor: Calle Madrid, Alfredo Raúl, Lurigancho, Lima 15 (PE)
(74) Representative: Herrero & Asociados, S.L.
(86) International application number: PCT/PE2022/050010
(87) International publication number: WO 2023/211295

(57) **Abstract**

The present invention relates to a peripheral support wind turbine designed to take advantage of non-linear wind speed profiles, wherein the turbine comprises a rotor with blades of constant cord and increasing thickness, the blades being supported by a peripheral rotating ring, wherein the twist angle of the blade section attached to the peripheral rotating ring is greater than the rest of the blade sections; wherein the cord length of the airfoils is constant along the length of the blade; wherein the thickness of the airfoils is increasing along the length of the blade, with thinner airfoils near the center; and wherein the turbine has an automatic protective folding system designed to radially fold the blades so that the turbine enters an aerodynamic stall.

## Description

### TECHNICAL FIELD

The present invention relates to the technical field of onshore wind turbines, more specifically a peripheral support wind turbine with a special shape and arrangement of blades.

### PRIOR ART

In the prior art there is patent document US2012112465A1, published on May 10, 2012, which relates to a wind turbine alternator module having a support structure, a turbine assembly comprising one or more blades radiating from an unsupported hub to an outer edge, not comprising a physical axis of rotation, bearings located around and engaged with the turbine assembly and supported by the support structure, a rotor comprising one or more magnets or coils supported by the turbine assembly, and a stator comprising one or more magnets or coils configured such that relative motion between the rotor and the stator induces a voltage across the rotor or stator coils, wherein the support structure is rectangular and the bearings are located at the corners of the perimeter of the support structure. It is noted that alternative embodiments allow the housings to be stacked, staggered or placed in any arrangement and joined together using any convenient method for installation.

Also, in the prior art there is US6064123A, published on May 16, 2000, which mentions a wind turbine wherein the blades radiate from a peripheral, rotating edge, wherein this peripheral edge comprises a plurality of magnets and a stator disposed below the peripheral edge, wherein as the magnets in the peripheral edge pass through the stator, electricity is generated.

However, this background information for peripheral support wind turbines does not mention blades where the twist angle of the blade section attached to the peripheral rotating ring is greater than the rest of the blade sections, where the cord length of the airfoils is constant along the length of the blades and where the thickness of the airfoils increases along the length of the blades, where the thinner airfoils are close to the center and the thicker airfoils are close to the peripheral rotating ring.

### DESCRIPTION OF THE INVENTION

The definition and incorporation of the Wind Cell and Wind Wall (WO2021034203, 'Wind Wall') in the present description is made merely as part of the context necessary for the correct description of the components of the invention.

### The Wind Cell:

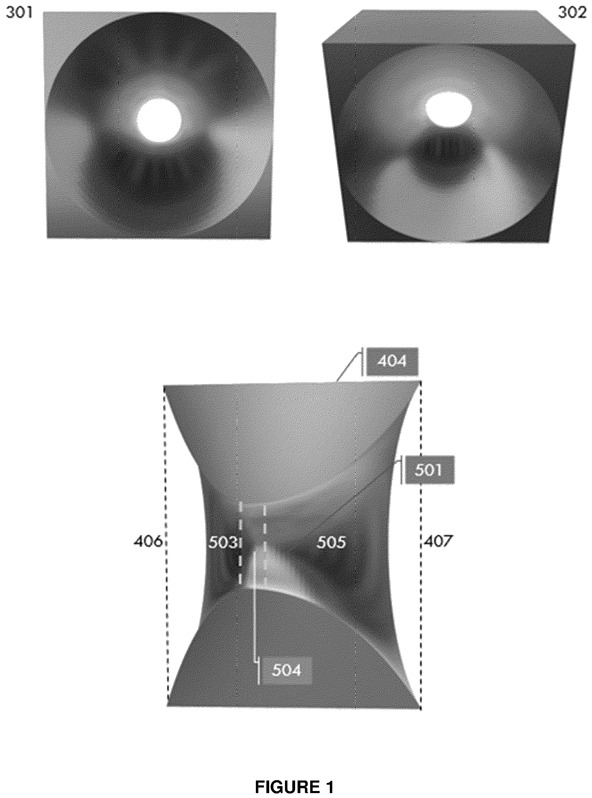

The Wind Cell (301, 302), according to Figure 1, is to be understood as that aerodynamic and individual structure, functional in itself, capable of amplifying wind speed, characterized by being formed by an Adjacent External Section (404), an Aerodynamic Internal Chamber (501) and Critical Space (504); wherein the Critical Space (504) is that space located between the Front Section (503) and the Rear Section (505), characterized by presenting the highest wind speed records.

In this sense, for the present description of the invention, Critical Space (504) should be understood as that space in which the Turbine (A) of the wind turbine system is suitable to be located.

### The Turbine (A):

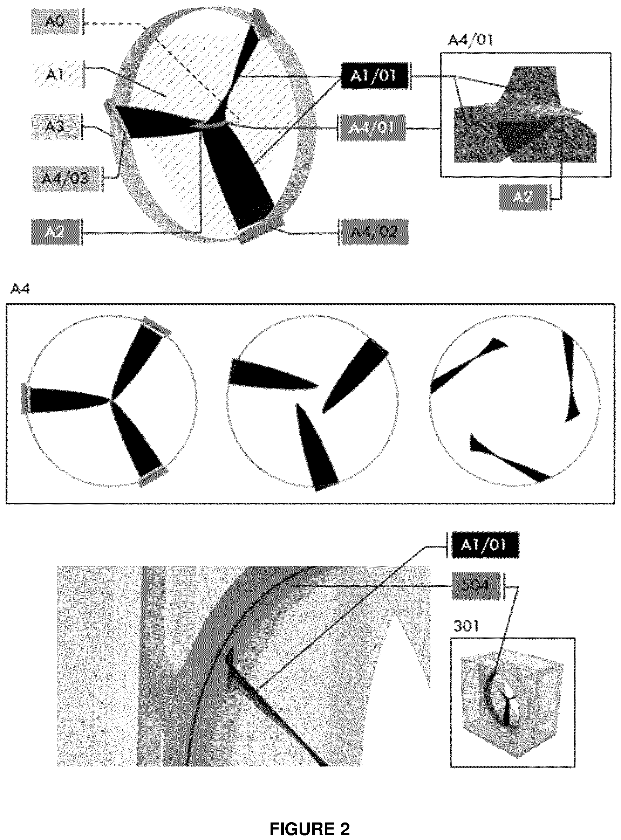

The present invention relates to a wind turbine specially designed to operate in the Critical Space (504) of a Wind Cell (301), characterized by revolving around an Axial Shaft (A0) and comprising a Rotor with Constant Cord Blades of Increasing Thickness (A1), a Light Hub (A2), a Peripheral Rotating Ring (A3) and a Protective Folding System (A4), as shown in Figure 2.

The Rotor with Constant Cord Blades of Increasing Thickness (A1) is characterized by comprising a number of blades (A1/01), equal to or greater than one; wherein the twist angle in the section next to the Critical Space wall (504) of the Wind Cell (301) is greater than the rest of the blade sections; wherein the cord length is constant along the length of the blades (A1/01); where the thickness of the airfoils is increasing along the extension of the blades (A1/01), being that the airfoils with less thickness are close to the center (Light Center (A2)) and the airfoils with more thickness are close to the Peripheral Rotating Ring (A3), in order to maximize the global torque of the Turbine (A).

The Light Center (A2) is a component located on the Axial Shaft (A0) around which the Turbine (A) of the wind system revolves, characterized by being an aerodynamic structure of light material whose utility is to serve as a removable and secondary fixing point of the Blades (A1/01) to avoid their bending due to aerodynamic forces and, above all, to maintain separate the environments with differential pressures generated around the extrados and intrados of each blade.

The Peripheral Rotating Ring (A3) is a rigid, annular structure characterized by having the same Axial Shaft (A0) and by housing within its structure the tips of the Blades (A1/01) in such a way that the Blades (A1/01) are clamped to and supported by the annular structure of the Peripheral Rotating Ring (A3); wherein, further, the Peripheral Rotating Ring (A3) is characterized by being the point of coupling between the Turbine (A) and an appropriate peripheral support system.

The Protective Folding System (A4) is a set of mechanisms designed to protect the Turbine (A) against adverse scenarios with critical wind speed magnitudes capable of compromising the integrity of the Turbine (A), characterized by activating an automatic mechanism that, first, disengages the Blades (A1/01) from the Light Hub (A2) by means of a Magnetic Activation Mechanism (A4/01) and, secondly, folds the Blades (A1/01) radially towards the Peripheral Rotating Ring (A3) by means of a Folding Mechanism (A4/02), such that the angle between the Blades (A1/01) and the Peripheral Rotating Ring (A3) is no longer 90 degrees, preferably less than 60 degrees, and even more preferably less than 45 degrees, and where the axis of rotation is a Folding Pivot (A4/03) fixed on the same Peripheral Rotating Ring (A3). In this way, as the Blades (A1/01) are radially folded, they cause the Turbine (A) to enter into aerodynamic stall causing the torque of the Turbine (A) to be reduced and, therefore, the revolutions of the wind turbine system as a whole to decrease to safe levels.

Wherein the Magnetic Activation Mechanism (A4/01) comprises permanent magnets that hold the root of the Blades (A1/01) to the Light Hub (A2), but whose magnetic force is graduated so that the magnetic clamping mechanism ceases when the aerodynamic forces generated by critical magnitudes of wind speed exceed a certain safety threshold.

Wherein the Folding Mechanism (A4/02) is characterized by having a hydraulic, mechanical and/or electronic system that automatically controls the gradual folding required by the Blades (A1/01) calculated on the basis of the size of the aerodynamic forces interacting on the Turbine (A).

Wherein the Folding Pivot (A4/03) is a pivot or hinge component characterized by being, on the one hand, fixed to the Peripheral Rotating Ring (A3) and, on the other hand, fixed to a Blade (A1/01), wherein the speed and angle of rotation are controlled by the Folding Mechanism (A4/02).

Thus, an object of the present invention is to maximize the turbine torque, given that according to the CFD simulations performed, the torque decreases substantially the greater the cord difference between the blade tip and the Light Center (A2) due to the pressure loss generated by such difference which can generate a loss of torque and power coefficient greater than 28%. Given that, according to the wind speed profile, the sections closer to the light center (A2) have a lower Reynolds number, which favors the use of thinner airfoils, while the sections closer to the peripheral rotating ring (A3) have a higher Reynolds number, which favors the use of thicker airfoils.

In this sense, unlike conventional wind turbines of the prior art, the present Turbine (A) is designed to take advantage of the non-linear quadratic features of the wind speed profile present in the Critical Space (504) of the Wind Cell (301) and, in this way, maximize the torque of the Turbine (A) and increase the overall efficiency of the wind system.

Another object of the present invention is that the Peripheral Rotating Ring allows to support the Blades (A1/01) and to avoid bending that compromises its structure and, thus, to facilitate the increase of the efficiency of the system by placing longer cord lengths just in the area of the tip of the Blades (A1/01), which is where the highest relative speed of the system is present and, therefore, the highest available usable power.

Another object of the present invention is that the radial folding of the blades produced by the Folding Mechanism (A4/02) is greater the higher the critical magnitudes of the wind speed, and vice versa, which allows the Turbine (A) to continue operating under a safe angular velocity, without the need to enter into a complete stop of the system.

### BRIEF DESCRIPTION OF THE FIGURES

**FIGURE 1****: The Wind Cell**
   301 Front view of the Wind Cell
   302 Oblique view of the Wind Cell
   404 Adjacent External Section or Shared Closed Cord
   501 Aerodynamic Inner Chamber
   503 Pressure Generating Space
   504 Critical Space
   505 Turbulence Suppressor Space
   406 Wind Cell Inlet Aperture
   407 Wind Cell Exit Aperture
**FIGURE 2****: Turbine (A)**
   A Turbine
   A0 Axial Turbine Shaft
   A1 Rotor with Constant Cord Blades of Increasing Thickness
   A1/01 Blades
   A2 Light Hub
   A3 Peripheral Rotating Ring
   A4 Protective Folding System
   A4/01 Magnetic Activation Mechanism
   A4/02 Folding Mechanism
   A4/03 Folding Pivot
   301 Wind Cell Front View
   504 Critical Space

### DETAILED DESCRIPTION OF THE INVENTION

The definition and incorporation of the Wind Cell and Wind Wall (WO2021034203, 'Wind Wall') in the present description is made merely as part of the context necessary for the correct description of the components of the invention.

### The Wind Cell:

The Wind Cell (301, 302), according to Figure 1, is to be understood as that aerodynamic and individual structure, functional by itself, capable of amplifying wind speed, characterized by being formed by an Adjacent External Section (404), an Aerodynamic Internal Chamber (501) and Critical Space (504); wherein the Critical Space (504) is that space located between the Front Section (503) and the Rear Section (505), characterized by presenting the highest wind speed records.

In this sense, for the present description of the invention, Critical Space (504) should be understood as that space in which the Turbine (A) of the wind turbine system is suitable to be located.

### The Turbine (A):

Turbine (A) is a peripheral support wind turbine specially designed to operate in the Critical Space (504) of the Wind Cell (301), characterized by revolving around an Axial Shaft (A0) and comprising a Rotor with Increasing Thickness Constant Cord Blades (A1), a Light Hub (A2), a Peripheral Rotating Ring (A3) and a Protective Folding System (A4), as shown in Figure 2.

The Rotor with Constant Cord Blades of Increasing Thickness (A1) is characterized by having a number of blades (A1/01), equal to or greater than one, a number of airfoils, a number of angles of attack and a number of twist angles along its length, where the twist angle of the section of the blades (A1/01) attached to the peripheral rotating ring (A3) is radically higher than the rest of the blade sections in order to adapt the angle of attack to the lower axial velocity and higher tangential velocity recorded in the area attached to the wall of the Critical Space (504) of the Wind Cell (301).

Wherein the cord length of the airfoils is constant along the extension of the blades (A1/01) in order to maximize the torque of the turbine (A) since, according to CFD simulations, the torque decreases substantially the greater the cord difference between the blade tip and the light center (A2) due to the pressure loss generated by this difference, which can generate a loss of torque and power coefficient of more than 28%.

Wherein the thickness of the airfoils is increasing along the extension of the blades (A1/01), being that the airfoils with less thickness are close to the light center (A2) and the airfoils with more thickness are close to the peripheral rotating ring (A3) in order to maximize the torque of the turbine (A) since, according to the wind speed profile, the sections closer to the Light Center (A2) have a lower Reynolds number, which favors the use of thinner airfoils, while the sections closer to the wall of the Peripheral Rotating Ring (A3) have a higher Reynolds number, which favors the use of thicker airfoils.

In this sense, unlike conventional wind turbines of the state of the art, the present Turbine (A) is designed to take advantage of the non-linear quadratic features of the wind speed profile present in the Critical Space (504) of the Wind Cell (301) and, in this way, maximize the torque of the Turbine (A) and increase the overall efficiency of the wind system.

The Light Center (A2) is a component located on the Axial Shaft (A0) around which the Turbine (A) of the wind system revolves, characterized by being a non-massive aerodynamic structure whose utility is to serve as a removable point of secondary fixation of the Blades (A1/01) to avoid their bending due to aerodynamic forces and, above all, to maintain separate the environments with differential pressures generated around the extrados and intrados of each blade. It should be noted that, according to CFD simulations, it has been confirmed that the blades (A1/01) held only by a peripheral ring, without a center to hold them, facilitate the leakage of pressure between environments in the absence of a complete physical barrier to prevent it, which implies that the shorter the blades (A1/01) with respect to the radius of the turbine (A), the greater the leakage of pressure between environments and, therefore, the lower the torque of the turbine (A).

In contrast to the nacelle of conventional wind turbine systems, which is a massive structure with aerodynamic losses due to the vortices generated in the wake behind its structure, the Light Center (A2) has a technical advantage as it is a light center where the vortices present in the wake of this component are smaller in scale and, therefore, represent lower aerodynamic losses for the system.

The Peripheral Rotating Ring (A3) is a rigid, annular structure characterized by having the same Axial Shaft (A0) and by housing within its structure the tips of the Blades (A1/01) in such a way that such Blades (A1/01) are attached to, and supported by, the annular structure of the Peripheral Rotating Ring (A3). Wherein, further, the Peripheral Rotating Ring (A3) is characterized as the coupling point between the Turbine (A) and the relevant peripheral support system.

Unlike conventional wind systems that operate with open turbines that have blades with decreasing cord lengths -where the longer cord lengths are at the blade root and the shorter cord lengths are at the blade tip- to avoid excessive bending that compromises the blade structure, this wind system operates with a Turbine (A) enclosed within a Wind Cell (301), this allows the use of a Peripheral Rotating Ring (A3) to support the Blades (A1/01) and avoid bending that compromises its structure and, thus, facilitate the increase of the efficiency of the system by placing longer cord lengths just in the area of the tip of the Blades (A1/01), which is where the highest relative speed of the system is present and, therefore, the highest available usable power.

The Protection Folding System (A4) is a set of mechanisms designed to protect the Turbine (A) against adverse scenarios with critical wind speed magnitudes capable of compromising the integrity of the Turbine (A), characterized by activating an automatic mechanism in the event of adverse scenarios that, first, disengages the Blades (A1/01) from the Light Center (A2) by means of a Magnetic Activation Mechanism (A4/01) and, secondly, folds the Blades (A1/01) radially towards the Peripheral Rotating Ring (A3) by means of a Folding Mechanism (A4/02), such that the angle between the Blades (A1/01) and the Peripheral Rotating Ring (A3) is no longer 90 degrees, and wherein the rotation axis is a Folding Pivot (A4/03) fixed on the same Peripheral Rotating Ring (A3). In this way, as the blades (A1/01) are folded radially, substantially close to the Peripheral Rotating Ring, they cause the Turbine (A) to enter into aerodynamic stall, causing the torque of the Turbine (A) to be reduced and, therefore, the revolutions of the wind turbine system as a whole to decrease to safe levels.

Wherein the Magnetic Activation Mechanism (A4/01) comprises permanent magnets that hold the root of the Blades (A1/01) to the Light Center (A2), but whose magnetic force is graduated so that the magnetic clamping mechanism ceases when the aerodynamic forces generated by critical magnitudes of wind speed exceed a certain safety threshold.

Wherein the Folding Mechanism (A4/02) is characterized by having a hydraulic, mechanical and/or electronic system that automatically controls the gradualness of the folding required by the Blades (A1/01) calculated on the basis of the size of the aerodynamic forces interacting on the Turbine (A), such that the radial folding of the Blades (A1/01) is greater the higher the critical magnitudes of the wind speed, and vice versa, which allows the Turbine (A) to continue to operate under a safe angular velocity, without the need to enter a complete system shutdown.

Wherein the Folding Pivot (A4/03) is a pivot or hinge component characterized by being, on the one hand, fixed to the Peripheral Rotating Ring (A3) and, on the other hand, fixed to a Blade (A1/01), wherein the speed and angle of rotation are controlled by the Folding Mechanism (A4/02).

In a preferred embodiment, the blades are made of a lightweight and durable material, such as fiberglass, the utility of the lightweight hub is to serve as a secondary attachment point for the blades (A101) to prevent blade flexing due to aerodynamic forces and, more importantly, to keep separate the pressure differential environments generated around the extrados and intrados of each blade. It is important to highlight that, according to CFD simulations, it has been confirmed that the blades (A1/01) held only by a peripheral ring, without a center to hold them, facilitate the pressure leakage between environments as there is no complete physical barrier to prevent it, which implies that the shorter the blades (A1/01) with respect to the radius of the turbine (A), the greater the pressure leakage between environments and, therefore, the lower the torque of the turbine (A).

Wherein, In contrast to the nacelle of conventional wind turbine systems, which is a massive structure with aerodynamic losses due to the vortices generated in the wake behind its structure, the light center (A2) has a technical advantage as it is a light center where the vortices present in the wake of this component are on a smaller scale and, therefore, represent lower aerodynamic losses for the system.

In summary, the technical effects delivered by the application of the components of this new wind turbine are as follows:
- Increase of the power coefficient: According to the CFD analysis and simulations performed, the Turbine (A) specially designed to operate in the Critical Space (504) of the Wind Cell (301, 302), characterized by having Rotor with Constant Cord Blades and Increasing Thickness (A1), which not only allow to have a larger lift surface to harvest a larger portion of the kinetic energy of the wind present in the Critical Space (504), but also prevents aerodynamic losses derived from the pressure drop due to the increasing cord blades, which enables the wind system to generate a power coefficient at least 1.6 times higher compared to conventional horizontal axis wind turbines.
- Reduced vortices: Due to the Light Center (A2), which being less massive mitigates the vortices generated in the center wake, and the Peripheral Rotating Ring (A3), which reduces the vortices generated at the blade tips, the wind system is characterized by generating lower aerodynamic losses in the wake, which translates into higher torque; this is something that cannot be achieved by conventional horizontal axis wind systems as they have a massive nacelle in the center and an open rotor with exposed blade tips.
- Greater flexibility: Due to the Protective Folding System (A4) which reduces torque on demand by gradually folding the blades (A1/01), the wind system achieves greater resilience to recover from adverse scenarios without having to enter a general system shutdown as the Turbine (A) continues to operate at a safe angular velocity.

The present invention is not limited to the preferred embodiments illustrated in the figures and described in detail above. Persons skilled in the art should recognize that other arrangements can be devised, for example, various shapes and sizes of modules of various materials, connected to various structures and objects and to each other in various ways. The invention covers all possible combinations of the various features of each embodiment described. It is clarified that modifications and variations of the invention can be constructed without departing from the spirit and scope of what is protected by the set of claims.

## Claims

1. A peripheral support wind turbine, **CHARACTERIZED BY** being designed to take advantage of the non-linear wind speed profiles present in a wind system with aerodynamically increased wind speed and comprising a rotor with constant cord blades of increasing thickness (A1) and a protective folding system (A4);
wherein the blades (A1/01) are supported by a peripheral rotating ring (A3), wherein the twist angle of the blade section (A1/01) attached to the peripheral rotating ring (A3) is greater than the rest of the blade sections; wherein the cord length of the airfoils is constant along the length of the blade (A1/01); where the thickness of the airfoils is increasing along the blade span (A1/01), with the airfoils with the smallest thickness being near the center and the airfoils with the greatest thickness being near the peripheral rotating ring (A3);
wherein the protective folding system (A4) is designed to be automatically actuated to radially fold the blades so that the turbine can stall aerodynamically when the wind speed is above the design parameters and jeopardize the integrity of the wind system.

2. The peripheral support wind turbine according to claim 1, **CHARACTERIZED IN THAT** the protective folding system (A4) includes a magnetic activation mechanism (A4/01), a folding mechanism (A4/02) and a folding pivot (A4/03);
wherein the magnetic activation mechanism (A4/01) comprises permanent magnets that hold the root of the blades (A1/01) to a light center (A2), wherein their magnetic force is adjusted such that the magnetic clamping mechanism is stopped when a certain safety threshold is exceeded;
wherein the folding mechanism (A4/02) is hydraulically, mechanically and/or electronically actuated and is configured to fold the blades (A1/01) such that the angle between the blades (A1/01) and the peripheral rotating ring (A3) is no longer 90 degrees, and further configured to automatically control the gradualness of the required folding of the blades (A1/01) such that the radial folding of the blades (A1/01) becomes greater the higher the critical wind speed magnitudes and vice versa, thereby allowing the turbine (A) to continue to operate at a safe angular velocity without requiring a complete shutdown of the system;
wherein the folding pivot (A4/03) is a hinge which is, on the one hand, attached to the peripheral rotating ring (A3) and, on the other hand, attached to one of the blades (A1/01), wherein the speed and angle of rotation are controlled by the folding mechanism (A4/02).

3. The peripheral support wind turbine according to claim 2, **CHARACTERIZED IN THAT** the light center (A2) is a component suitable for being located about an axial shaft (A0) around which the turbine rotates, wherein the light center (A2) is an aerodynamic structure of lightweight material and is also a removable secondary blade attachment point (A1/01) which forms part of the magnetic activation mechanism (A4/01).

4. The peripheral support wind turbine according to claim 2, **CHARACTERIZED IN THAT** the peripheral rotating ring (A3) is a rigid, annular structure having the same axial shaft (A0) around which the turbine (A) rotates, and which houses within its structure the blade tips (A1/01) and which is also part of the magnetic activation mechanism (A4/01).
